# EUROPEAN PATENT SPECIFICATION

(11) **EP 4 435 491 B1**
(45) Date of publication and mention of the grant of the patent: **06.05.2026**
(21) Application number: 22918213.4
(22) Date of filing: 14.09.2022
(51) Int. Cl.: G02B 27/01, G02B 26/08, B60K 35/23, B60K 35/233

(54) **DISPLAY DEVICE AND VEHICLE**
ANZEIGEVORRICHTUNG UND FAHRZEUG
DISPOSITIF D'AFFICHAGE ET VÉHICULE

(30) Priority: 05.01.2022 CN 202210006410
(43) Date of publication of application: 25.09.2024
(73) Proprietor: Shenzhen Yinwang Intelligent Technologies Co., Ltd., Shenzhen City, Guangdong 518129 (CN)
(72) Inventor: WANG, Mengran, Shenzhen, Guangdong 518129 (CN); PENG, Haijun, Shenzhen, Guangdong 518129 (CN)
(74) Representative: Gill Jennings & Every LLP
(86) International application number: PCT/CN2022/118593
(87) International publication number: WO 2023/130759

(56) References cited:
- WO-A1-2021/235354
- CN-A- 112 558 299
- CN-A- 113 671 703
- JP-A- 2006 292 837
- JP-A- 2006 292 837
- JP-A- 2020 064 235
- US-A1- 2012 019 781
- US-A1- 2014 118 701
- US-A1- 2014 118 701
- US-A1- 2017 285 453
- US-A1- 2020 033 598
- US-A1- 2020 209 960
- US-A1- 2021 360 209

## Description

### TECHNICAL FIELD

Embodiments of this application relate to the field of display technologies and the field of intelligent automobile driving technologies, and more specifically, to a display apparatus.

### BACKGROUND

Automobiles have become an indispensable transportation means in daily lives of people. As a quantity of automobile increases, traffic accidents occur more frequently. To improve driving safety, a head-up display (head-up display, HUD), especially an augmented reality head-up display (augmented reality head-up display, AR-HUD), has been extensively researched.

The AR-HUD can project, to a front windshield of an automobile, some important information required by a driver during driving. A displayed virtual image and a real scene around the automobile are fused. Light fused with the real scene is reflected and injected into the driver's eyes. In this way, the driver can see the virtual image fused with the real scene, and does not need to look down at a meter. The driver's eyes always look at a road ahead. This reduces impact of looking down on safe driving.

To achieve effect of augmented reality, a current augmented reality head-up display generally needs two or more picture generation units (picture generation units, PGUs) to provide a plurality of images. This causes the AR-HUD to have a large size and high costs.

Therefore, how to reduce a size and costs of the HUD and improve display effect is an urgent problem to be resolved.

US 2014/118701 A1 discloses a projection apparatus capable of projecting a first image and a second image.

### SUMMARY

This application provides a display apparatus and a transportation means. The display apparatus has a simple light path structure, can improve image generation quality, and is more compact in size.

According to a first aspect of the invention, a display apparatus is provided as set out in appended claim 1. The apparatus includes a projection module, a deflection reflection component, and a prism group. The projection module is configured to project a first path of imaging light to the deflection reflection component. The deflection reflection component is configured to: reflect the first path of imaging light to generate at least two paths of imaging sub-light, and respectively reflect the at least two paths of imaging sub-light to the prism group at at least two angles. The prism group is configured to: enable the at least two paths of imaging sub-light to propagate in the prism group through different paths, and emit the at least two paths of imaging sub-light.

Based on the foregoing solution, the display apparatus provided in this application splits, through the deflection reflection component, one path of imaging light into at least two paths of imaging sub-light, and changes, through the prism group, optical paths of the at least two paths of imaging light, so that different imaging sub-light can be imaged on different focal planes, to form at least two images and to implement multi-image display effect.

With reference to the first aspect, in some implementations of the first aspect, the prism group includes a first prism and a second prism. The first prism is configured to: totally reflect, to a reflective surface of the deflection reflection component, the first path of imaging light projected by the projection module, and transmit the at least two paths of imaging sub-light reflected by the deflection reflection component. The second prism is configured to: transmit first imaging sub-light that is in the at least two paths of imaging sub-light and that is from the first prism, and reflect second imaging sub-light that is in the at least two paths of imaging sub-light and that is from the first prism, so that the second imaging sub-light is emitted from the second prism.

Based on the foregoing solution, the display apparatus provided in this application changes, through the prism group including the two prisms, the optical path of the imaging sub-light emitted by the deflection reflection component. To be specific, the first imaging sub-light is enabled to transmit through the first prism and the second prism, and the second imaging sub-light is enabled to transmit through the first prism, and to be reflected in and to be emitted from the second prism. This process does not need to be controlled by precision machinery, and has no risk of image crosstalk. This improves imaging reliability.

With reference to the first aspect, in some implementations of the first aspect, the first prism includes a first prism surface, a second prism surface, and a third prism surface. The first path of imaging light projected by the projection module transmits through the first prism surface, is totally reflected by the second prism surface, and then is emitted from the third prism surface. The at least two paths of imaging sub-light reflected by the deflection reflection component transmit through the third prism surface and the second prism surface.

With reference to the first aspect, in some implementations of the first aspect, the second prism includes a fourth prism surface, a fifth prism surface, and a sixth prism surface. The first imaging sub-light that is in the at least two paths of imaging sub-light and that is emitted by the first prism transmits through the fourth prism surface, and is emitted from the sixth prism surface. The second imaging sub-light that is in the at least two paths of imaging sub-light and that is emitted by the first prism transmits through the fourth prism surface, is reflected by the fifth prism surface, and then is emitted from the sixth prism surface.

With reference to the first aspect, in some implementations of the first aspect, the second prism surface of the first prism is parallel to the fourth prism surface of the second prism.

Based on the foregoing solution, the second prism surface of the first prism is parallel to the fourth prism surface of the second prism, and it can be ensured that angles of the first imaging sub-light and the second imaging sub-light that are emitted by the first prism are the same as incident angles to the second prism, so that a design of the prism is simpler.

With reference to the first aspect, in some implementations of the first aspect, the third prism surface of the first prism is parallel to a reflective surface of the deflection reflection component without angular deflection, and the sixth prism surface of the second prism is parallel to the reflective surface of the deflection reflection component without angular deflection.

Optionally, the reflective surface of the deflection reflection component without angular deflection is in a horizontal direction.

With reference to the first aspect, in some implementations of the first aspect, an included angle between the second prism surface and the third prism surface is an angle α, and an included angle between the fourth prism surface and the fifth prism surface is an angle β.

With reference to the first aspect, in some implementations of the first aspect, when the first path of imaging light is incident to the second prism surface at a specific incident angle, the angle α enables the first imaging light to be totally reflected to the reflective surface of the deflection reflection component, and the angle β enables the second imaging sub-light to be reflected on the fifth prism surface and to be emitted from the sixth prism surface.

Optionally, the angle β enables the second imaging sub-light to be totally reflected by the fifth prism surface and to be emitted from the sixth prism surface.

Based on the foregoing solution, when the second imaging sub-light is totally reflected on the fifth prism surface, utilization of the second imaging sub-light can be improved.

Optionally, the prism group may enable the first imaging sub-light and the second imaging sub-light to have a same emitting angle.

Based on the foregoing solution, when the first imaging sub-light and the second imaging sub-light have the same emitting angle, a same imaging module may be shared, so that the first imaging light and the second imaging light that have different optical paths are imaged on the different focal planes.

With reference to the first aspect, in some implementations of the first aspect, the prism group includes a third prism, a fourth prism, and a fifth prism. The third prism is configured to: totally reflect, to a reflective surface of the deflection reflection component, the first path of imaging light projected by the projection module, and transmit the at least two paths of imaging sub-light reflected by the deflection reflection component. The fourth prism is configured to: transmit first imaging sub-light that is in the at least two paths of imaging sub-light and that is from the third prism, and transmit second imaging sub-light that is in the at least two paths of imaging sub-light and that is from the fifth prism. The fifth prism is configured to: reflect the second imaging sub-light that is in the at least two paths of imaging sub-light and that is from the third prism, and enable the second imaging sub-light to be emitted from the fifth prism to the fourth prism.

Based on the foregoing solution, the display apparatus provided in this application changes, through the prism group including the three prisms, the optical paths of the imaging sub-light emitted by the deflection reflection component. To be specific, the first imaging sub-light is enabled to transmit through the third prism and the fourth prism, and the second imaging sub-light is enabled to transmit through the third prism, to be reflected in the fifth prism, and to be emitted from the fourth prism. This process does not need to be controlled by precision machinery, and has no risk of image crosstalk. This improves imaging reliability.

With reference to the first aspect, in some implementations of the first aspect, the third prism includes a first prism surface, a second prism surface, and a third prism surface. The first path of imaging light projected by the projection module transmits through the first prism surface of the third prism, is totally reflected by the second prism surface of the third prism, and then is emitted from the third prism surface of the third prism. The at least two paths of imaging sub-light reflected by the deflection reflection component transmit through the third prism surface of the third prism and the second prism surface of the third prism at at least two angles.

With reference to the first aspect, in some implementations of the first aspect, the fourth prism includes a fourth prism surface, a fifth prism surface, and a sixth prism surface. The first imaging sub-light that is in the at least two paths of imaging sub-light and that is emitted by the third prism transmits through the fourth prism surface of the fourth prism, and is emitted from the fifth prism surface of the fourth prism. The second imaging sub-light that is in the at least two paths of imaging sub-light and that is emitted by the third prism transmits through the sixth prism surface of the fourth prism, and is emitted from the fifth prism surface of the fourth prism.

With reference to the first aspect, in some implementations of the first aspect, the fifth prism includes a seventh prism surface, an eighth prism surface, and a ninth prism surface. The second imaging sub-light that is in the at least two paths of imaging sub-light and that is emitted by the third prism transmits through the seventh prism surface of the fifth prism, is reflected by the eighth prism surface of the fifth prism and the ninth prism surface of the fifth prism, and then is emitted from the eighth prism surface.

With reference to the first aspect, in some implementations of the first aspect, the second prism surface of the third prism is parallel to the fourth prism surface of the fourth prism, and the second prism surface of the third prism is parallel to the seventh prism surface of the fifth prism.

With reference to the first aspect, in some implementations of the first aspect, the sixth prism surface of the fourth prism is parallel to the eighth prism surface of the fifth prism.

With reference to the first aspect, in some implementations of the first aspect, the sixth prism surface of the fourth prism is parallel to a reflective surface of the deflection reflection component without angular deflection, and the third prism surface of the third prism is parallel to the reflective surface of the deflection reflection component without angular deflection.

Optionally, the reflective surface of the deflection reflection component without angular deflection is in a horizontal direction.

With reference to the first aspect, in some implementations of the first aspect, an included angle between the second prism surface and the third prism surface is an angle α, an included angle between the seventh prism surface and the eighth prism surface is an angle β, and an included angle between the eighth prism surface and the ninth prism surface is an angle γ.

With reference to the first aspect, in some implementations of the first aspect, when the first path of imaging light is incident to the second prism surface at a specific incident angle, the angle α enables the first imaging light to be totally reflected to the reflective surface of the deflection reflection component, and the angle β and the angle γ enable the second imaging sub-light to be reflected on the eighth prism surface and the ninth prism surface and to be emitted from the eighth prism surface.

Optionally, the angle β enables the second imaging sub-light to be totally reflected by the eighth prism surface and to be incident to the ninth prism surface, and the angle γ enables the second imaging sub-light to be totally reflected on the ninth prism surface and to be emitted from the eighth prism surface.

Based on the foregoing solution, when the second imaging sub-light is totally reflected on the eighth prism surface and the ninth prism surface, utilization of the second imaging sub-light can be improved.

Optionally, the prism group may enable the first imaging sub-light and the second imaging sub-light to have a same emitting angle.

Based on the foregoing solution, when the first imaging sub-light and the second imaging sub-light have the same emitting angle, a same imaging module may be shared, so that the first imaging light and the second imaging light that have different optical paths are imaged on the different focal planes.

Based on the foregoing solution, the display apparatus provided in this application, through a design of the prism group, has a simple light path structure and a compact size, and no crosstalk exists between images. This improves the imaging reliability.

With reference to the first aspect, in some implementations of the first aspect, the deflection reflection component includes a first reflection region and a second reflection region. The first reflection region is used to reflect one part of a light beam of the first path of imaging light to the prism group at a first angle, to form a first path of imaging sub-light. The second reflection region is used to reflect the other part of the light beam of the first path of imaging light to the prism group at a second angle, to form a second path of imaging sub-light.

The first reflection region and the second reflection region are disposed based on a field of view required for imaging.

Based on the foregoing solution, different reflection regions are disposed for the deflection reflection component, and the first path of imaging light is split into the first imaging sub-light and the second imaging sub-light through reflection angles of the different reflection regions, to output two beams of imaging light.

According to the invention, the deflection reflection component is configured to reflect the first path of imaging light to the prism group at a first moment at a first angle, to form a first path of imaging sub-light. The deflection reflection component is further configured to reflect the first path of imaging light to the prism group at a second moment at a second angle, to form a second path of imaging sub-light.

According to the invention, the first path of imaging light projected by the projection module at the first moment and the first path of imaging light projected by the projection module at the second moment respectively carry different images.

With reference to the first aspect, in some implementations of the first aspect, the deflection reflection component includes a digital micro-mirror device DMD, a reflector, or a micro-electro-mechanical system chip.

With reference to the first aspect, in some implementations of the first aspect, the apparatus further includes: a spatial imaging module, configured to generate at least two images based on the at least two paths of imaging light from the prism group.

According to a second aspect of the invention, a transportation means is provided as set out in appended claim 13. The transportation means includes the display device according to any one of the first aspect and the possible implementations of the first aspect.

### BRIEF DESCRIPTION OF DRAWINGS

FIG. 1 is a schematic diagram of an application scenario of a display device according to an embodiment of this application;
FIG. 2 is a schematic diagram of a structure of a display device 100 according to an embodiment of this application;
FIG. 3 is a schematic diagram of a deflection reflection component applicable to this application;
FIG. 4 is a schematic diagram of an image control region of a deflection reflection component applicable to this application;
FIG. 5 is a schematic diagram of another deflection reflection component applicable to this application;
FIG. 6 is a schematic diagram of a structure of a prism group applicable to this application;
FIG. 7 is a schematic diagram of a structure of another prism group applicable to this application;
FIG. 8 is a schematic diagram of a structure of a display device 800 according to an embodiment of this application;
FIG. 9 is a schematic diagram of imaging applicable to this application;
FIG. 10 is a schematic diagram of a structure of a display device 1000 according to an embodiment of this application;
FIG. 11 is a schematic diagram of a structure used in a transportation means according to an embodiment of this application;
FIG. 12 is a schematic diagram of a circuit of a display device according to an embodiment of this application; and
FIG. 13 is a schematic diagram of a functional framework of a transportation means according to an embodiment of this application.

### DESCRIPTION OF EMBODIMENTS

The following describes technical solutions of embodiments of this application with reference to accompanying drawings.

For ease of understanding embodiments of this application, the following descriptions are provided.

First, in the following text descriptions or accompanying drawings in embodiments of this application, terms such as "first", "second", "third", "fourth", and the like, and various numbers are merely used for differentiation for ease of description, do not need to be used to describe a specific order or sequence, and are not used to limit the scope of embodiments of this application. For example, for differentiating different imaging light or different prism surfaces.

Second, in the following embodiments of this application, the terms "include", "have", and any other variants mean to cover the non-exclusive inclusion, for example, a process, method, system, product, or device that includes a series of steps or units is not necessarily limited to those clearly listed steps or units, but may include another inherent step or unit not clearly listed or inherent to such a process, method, product, or device.

Third, in embodiments of this application, the term such as "example", "for example", or the like is used to represent an example, an illustration, or a description. Any embodiment or design scheme described with "example" or "for example" should not be explained as being more preferred or having more advantages than another embodiment or design scheme. Use of the term such as "example", "for example", or the like is intended to present a related concept in a specific manner for ease of understanding.

Fourth, in embodiments of this application, both imaging light and imaging sub-light are light carrying an image (or image information), and are used to generate an image.

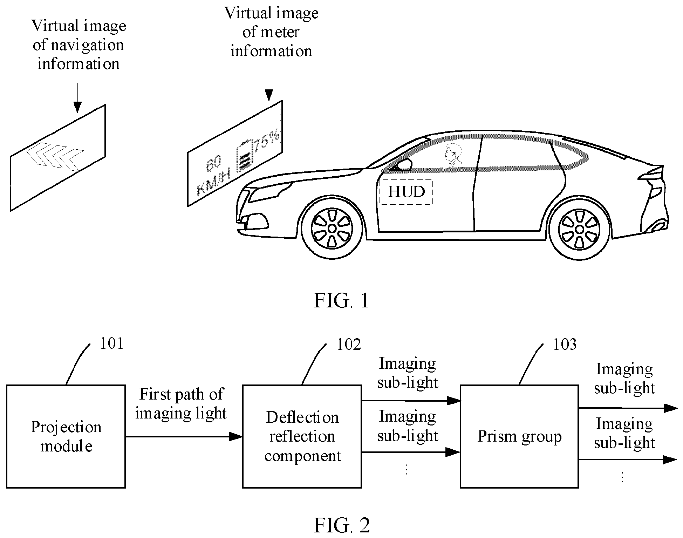

FIG. 1 is a schematic diagram of an application scenario of an HUD device according to an embodiment of this application. As shown in FIG. 1, the HUD device is disposed on an automobile. The HUD device is configured to project status information of the vehicle, indication information of an external object, navigation information, and the like into a field of view of a driver through a windshield of the vehicle. The status information includes but is not limited to information such as a driving speed, a driving mileage, a fuel amount, a water temperature, a vehicle light status, and the like. The indication information of the external object includes but is not limited to a safe inter-vehicle distance, a surrounding obstacle, a vehicle reversing image, and the like. The navigation information includes but is not limited to a direction arrow, a distance, a driving time, and the like.

Virtual images corresponding to the navigation information and the indication information of the external object may be superimposed on a real environment outside the vehicle, so that the driver may obtain visual effect of augmented reality. For example, the virtual images may be used for augmented reality (augmented reality, AR) navigation, adaptive cruise, lane deviation warning, and the like. Because the virtual image corresponding to the navigation information may be combined with a real scene, the HUD device generally fits an advanced driver assistance system (advanced driver assistance system, ADAS) of the automobile. In order not to interfere with a road condition, a distance between a virtual image corresponding to meter information and human eyes is generally 2 meters to 3 meters. To better fuse the virtual image corresponding to the navigation information with a real road surface, a distance between the virtual image corresponding to the navigation information and the human eyes is generally 7 meters to 15 meters. A location of the virtual image of the navigation information is referred to as a far-focus plane, and a plane in which the virtual image of the meter information is located is referred to as a near-focus plane.

However, to implement an AR-HUD with dual-image display, two picture generation apparatuses are generally used to emit two groups of HUD imaging light paths, to respectively implement projection for two different distances. This has a disadvantage of occupying large space in the vehicle. Therefore, how to project and emit one path of imaging light through one picture generation apparatus to display two images on the windshield is still a hot development direction.

FIG. 2 is a schematic diagram of a structure of a display apparatus 100 according to an embodiment of this application. As shown in FIG. 2, the display apparatus includes a projection module 101, a deflection reflection component 102, and a prism group 103.

The projection module 101 is configured to project a first path of imaging light to the deflection reflection component 102. The deflection reflection component 102 is configured to: reflect the first path of imaging light projected by the projection module 101 to generate at least two paths of imaging sub-light, and respectively reflect the at least two paths of imaging sub-light to the prism group 103 at at least two angles. The prism group 103 is configured to: enable the at least two paths of imaging sub-light generated by the deflection reflection component 102 to propagate in the prism group 103 through different paths, and emit the at least two paths of imaging sub-light.

In this embodiment of this application, the projection module 101 should include at least a light source, a modulation unit, and a projection device. The light source is configured to provide a light beam carrying image data. The modulation unit is configured to modulate, based on the image data, the light beam emitted by the light source, so that light output from the modulation unit carries the image data, that is, the light output by the modulation unit is the imaging light (or referred to as image light). The projection device is configured to project the imaging light carrying the image data.

For example, the deflection reflection component 102 may include a digital micro-mirror device (digital micro-mirror device, DMD), a reflector, a micro-motor system, or the like, and this is not limited in this application.

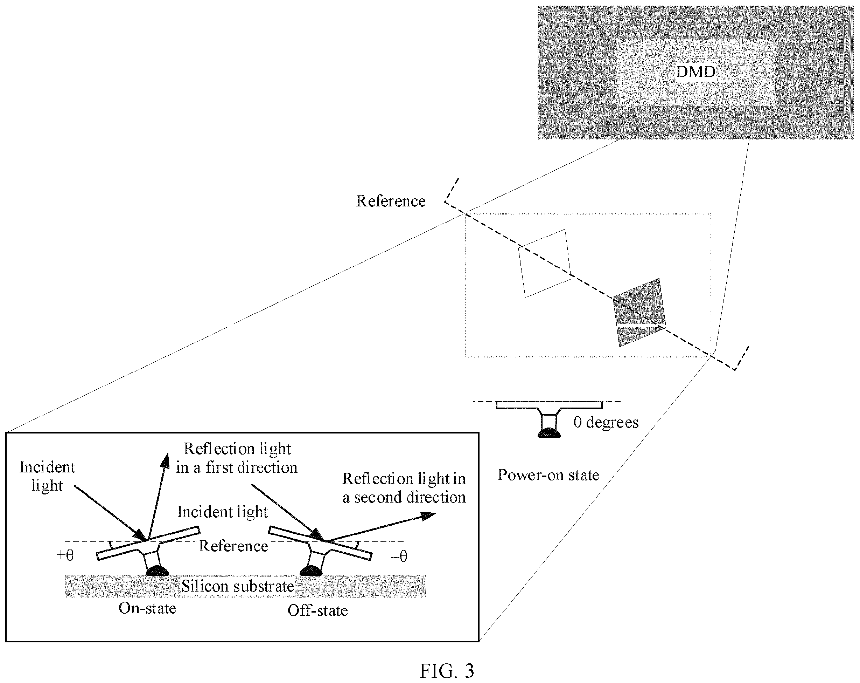

The DMD is a fully digital flat panel display device, and integrates a micro reflector array on a chip. Details are shown in FIG. 3. Each micro reflector on the DMD may be considered as an optical switch, and can implement reversal of a positive angle and a negative angle (for example, generally 12 degrees) along a diagonal line. It may be considered that the positive angle indicates an on-state (On-state), and the negative angle indicates an off-state (Off-state). A power-on state (without loading any picture) also exists, and each micro reflector does not deflect.

In an implementation, when the deflection reflection component 102 is a DMD, the DMD may be divided, based on images carried in the first path of imaging light, and more specially, based on a quantity of images included in the first path of imaging light, into regions whose quantity is the same as the quantity of the images. Deflection angles of micro reflectors in a same region are the same, and deflection angles of micro reflectors in different image control regions are different, to control reflection of imaging light including different images to different directions, so that different imaging light generates different images.

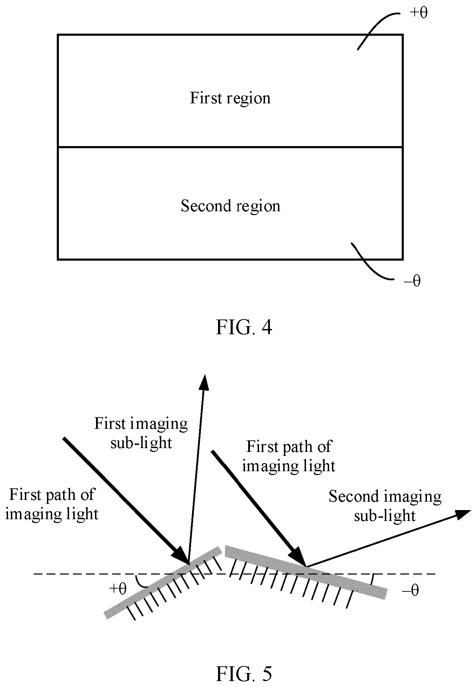

For example, the first path of imaging light includes two images. The micro reflector array on the DMD shown in FIG. 4 is divided into two regions. Deflection angles of reflectors in a first region are +θ, and deflection angles of reflectors in a second region are -θ. When first imaging light is projected to the first region as incident light, the first imaging light is reflected by a micro reflector at the angle of +θ, to generate the first imaging sub-light. The first imaging sub-light is emitted in a first direction. When the first imaging light is projected to the second region as incident light, the first imaging light is reflected by a micro reflector at the angle of -θ, to generate the second imaging sub-light. The second imaging sub-light is emitted in a second direction. The first imaging sub-light and the second imaging sub-light carry different images (or image information).

In another possible implementation, when the deflection reflection component 102 is a reflector, a quantity of reflectors is designed based on a quantity of images in the first imaging light, and deflection angles of different reflectors are different, so that light of different images included in the first path of incident imaging light is reflected at the different angles. For example, as shown in FIG. 5, the deflection reflection component 102 includes two reflectors. A deflection angle of a first reflector is +θ, and a deflection angle of a second reflector is -θ. When first image light is incident to the reflector group, the reflector at the angle of +θ reflects the first image light in a first direction. When second image light is incident to the reflector group, the reflector at the angle of -θ reflects the second image light in a second direction.

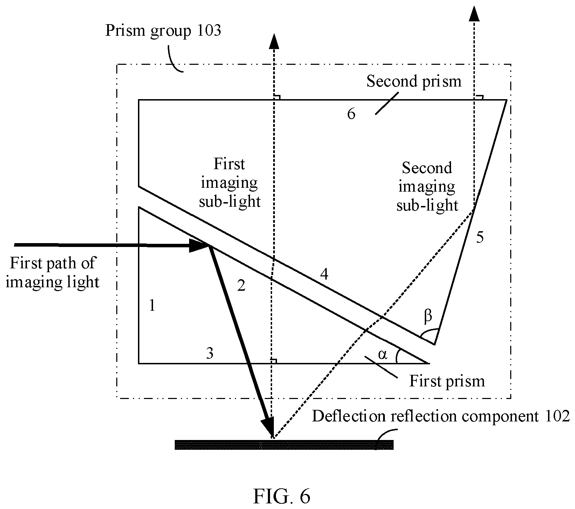

In some examples, the prism group 103 may include two prisms, three prisms, and another quantity of prisms, and this is not limited in this application. In an implementation, the prism group 103 includes two prisms. As shown in FIG. 6, a first prism is configured to: totally reflect, to a reflective surface of the deflection reflection component 102, the first path of imaging light projected by the projection module 101, and transmit the first imaging sub-light and the second imaging sub-light that are reflected by the deflection reflection component 102. A second prism is configured to: transmit the first imaging sub-light from the first prism, and reflect the second imaging sub-light from the first prism, so that the second imaging sub-light is emitted from the second prism.

Specifically, the first prism may include a first prism surface, a second prism surface, and a third prism surface, and the second prism may include a fourth prism surface, a fifth prism surface, and a sixth prism surface.

The first path of imaging light projected by the projection module 101 transmits through the first prism surface, is totally reflected by the second prism surface, and then is emitted from the third prism surface. The first imaging light emitted from the third prism surface is incident to the deflection reflection component 102, and is reflected to generate the first imaging sub-light and the second imaging sub-light. The first imaging sub-light transmits through the third prism surface and the second prism surface, is incident to the fourth prism surface, transmits through the fourth prism surface, and then is emitted from the sixth prism surface. For the second imaging sub-light, the second imaging sub-light first transmits through the third prism surface, transmits through the second prism surface and the fourth prism surface, is incident to the fifth prism surface, is reflected by the fifth prism surface, and transmits through the sixth prism surface.

For example, the first prism and the second prism may be bonded through an optical adhesive, a bonding surface is located between the second prism surface and the fourth prism surface, and air gaps are reserved between the second prism surface and the optical adhesive and between the fourth prism surface and the optical adhesive, so that when the first imaging light is incident to the second prism surface, a total reflection angle of the first path of imaging light on the second prism surface can be satisfied. The second prism surface may be parallel to the fourth prism surface, so that angles at which the first imaging sub-light and the second imaging sub-light are emitted from the second prism surface to the fourth prism surface remain unchanged.

In addition, for the first prism, an included angle α between the second prism surface and the third prism surface is set to enable an incident angle of the first path of imaging light on the second prism surface to be greater than or equal to a total reflection angle of the first prism, and to enable incident angles that are of the first imaging sub-light and the second imaging sub-light from the deflection reflection component 102 and that are on the second prism surface to be less than the total reflection angle of the first prism.

For the second prism, an included angle β between the fourth prism surface and the fifth prism surface enables the second imaging sub-light to be reflected on the fifth prism surface, and enables an incident angle of the reflected second imaging sub-light on the sixth prism surface to be less than a total reflection angle of the second prism.

Optionally, the foregoing setting of the angle β may also enable the second imaging sub-light to satisfy total reflection on the fifth prism surface, so that more second imaging sub-light is emitted from the sixth prism surface.

Optionally, the sixth prism surface is parallel to the third prism surface.

In an implementation, the sixth prism surface and the third prism surface are in a horizontal direction. When the first path of imaging light is incident to the second prism surface at a specific incident angle, the angle α enables the first imaging light to be incident to the deflection reflection component 102, and fits the deflection angle +θ of the deflection reflection component 102, so that an emitting direction of the first imaging sub-light is perpendicular to the horizontal direction. In addition, the deflection angle -θ of the deflection reflection component 102 enables the second imaging sub-light to be incident to the fifth prism surface in a reflection direction, and fits the angle β so that the second imaging sub-light is reflected by the fifth prism surface and is perpendicularly emitted from the sixth prism surface. That is, the prism group may enable the first imaging sub-light and the second imaging sub-light to have a same emitting angle.

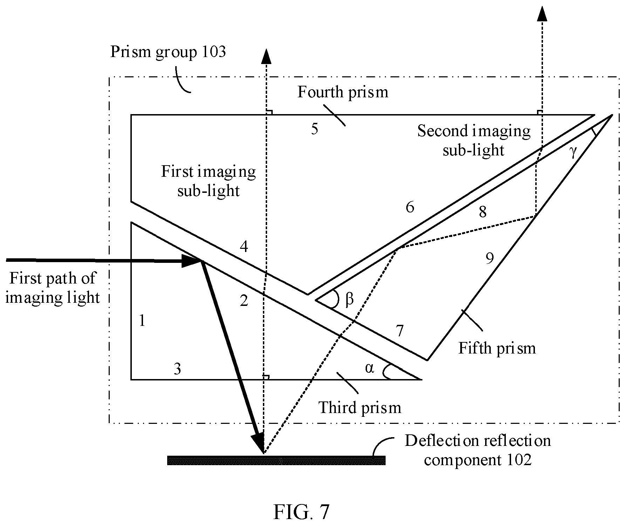

In an implementation, the prism group 103 includes three prisms. As shown in FIG. 7, a third prism is configured to: totally reflect, to a reflective surface of the deflection reflection component 102, the first path of imaging light projected by the projection module 101, and transmit first imaging sub-light and second imaging sub-light that are reflected by the deflection reflection component 102. The fourth prism is configured to: transmit the first imaging sub-light from the third prism, and transmit the second imaging sub-light from the fifth prism. The fifth prism is configured to: reflect the second imaging sub-light from the third prism, and enable the second imaging sub-light to be emitted from the fifth prism to the fourth prism.

Specifically, the third prism may include a first prism surface, a second prism surface, and a third prism surface, the fourth prism may include a fourth prism surface, a fifth prism surface, and a sixth prism surface, and the fifth prism includes a seventh prism surface, an eighth prism surface, and a ninth prism surface.

The first path of imaging light projected by the projection module 101 transmits through the first prism surface, is totally reflected by the second prism surface, and then is emitted from the third prism surface. The first imaging light emitted from the third prism surface is incident to the deflection reflection component 102, and is reflected to generate the first imaging sub-light and the second imaging sub-light. The first imaging sub-light transmits through the third prism surface and the second prism surface, is incident to the fourth prism surface, transmits through the fourth prism surface, and then is emitted from the fifth prism surface. For the second imaging sub-light, the second imaging sub-light is first transmits through the third prism surface, transmits through the second prism surface and the seventh prism surface, is incident to the eighth prism surface, is reflected by the eighth prism surface and the ninth prism surface, transmits through the eighth prism surface, is incident to the sixth prism surface, and then transmits through the sixth prism surface and the fifth prism surface.

The third prism, the fourth prism, and the fifth prism may be bonded through an optical adhesive, and bonding surfaces are located between the second prism surface and the fourth prism surface and between the second prism surface and the seventh prism surface. In addition, air gaps are reserved between the second prism surface and the optical adhesive and between the fourth prism surface and the optical adhesive, and air gaps are reserved between the second prism surface and the optical adhesive and between the seventh prism surface and the optical adhesive, so that when the first imaging light is incident to the second prism surface, a total reflection angle of the first path of imaging light on the second prism surface can be met. The second prism surface may be parallel to the fourth prism surface, and the second prism surface may be parallel to the seventh prism surface, so that an angle at which the first imaging sub-light is emitted from the second prism surface and an incident angle at which the first imaging sub-light is incident to the fourth prism surface remain unchanged, and an angle at which the second imaging sub-light is emitted from the second prism surface and an incident angle at which the second imaging sub-light is incident to the seventh prism surface remain unchanged. The eighth prism surface is parallel to the sixth prism surface, so that an angle at which the second imaging light is emitted from the eighth prism surface is the same as an angle at which the second imaging light is incident to the sixth prism surface. The eighth prism surface and the sixth prism surface may be bonded through an optical adhesive.

In addition, for the third prism, an included angle α between the second prism surface and the third prism surface may be set to enable an incident angle of the first path of imaging light on the second prism surface to be greater than or equal to a total reflection angle of the first prism, and to enable incident angles that are of the first imaging sub-light and the second imaging sub-light from the deflection reflection component 102 and that are on the second prism surface to be less than the total reflection angle of the first prism.

For the fifth prism, an included angle β between the seventh prism surface and the eighth prism surface and an included angle γ between the eighth prism surface and the ninth prism surface are set, so that the second imaging sub-light is reflected once on the eighth prism surface, and the second imaging light reflected by the eighth prism surface is reflected once on the ninth prism surface, and is emitted from the eighth prism surface. That is, the angle β and the angle γ are controlled, so that an angle at which the second imaging sub-light reflected by the deflection reflection component 102 is incident to the eighth prism surface is less than a total reflection angle of the second prism.

Optionally, the foregoing setting of the angle β and the angle γ may also enable the second imaging sub-light to satisfy total reflection on the eighth prism surface and the ninth prism surface, so that more second imaging sub-light is emitted from the eighth prism surface.

Optionally, the fifth prism surface is parallel to the third prism surface.

In an implementation, the fifth prism surface and the third prism surface are in a horizontal direction. When the first path of imaging light is incident to the second prism surface at a specific incident angle, the angle α enables the first imaging light to be incident to the deflection reflection component 102, and fits the deflection angle +θ of the deflection reflection component 102, so that an emitting direction of the first imaging sub-light is perpendicular to the horizontal direction. In addition, the deflection angle -θ of the deflection reflection component 102 enables the second imaging sub-light to be incident to the eighth prism surface in a reflection direction, fits the angle β to enable the second imaging sub-light to be reflected on the eighth prism surface and incident to the ninth prism surface, and fits the angle γ to enable the second imaging sub-light to be reflected on the ninth prism surface in a direction perpendicular to a horizontal plane, to vertically transmit through the sixth prism surface, and to be vertically emitted from the fifth prism surface. That is, the prism group may enable the first imaging sub-light and the second imaging sub-light to have a same emitting angle.

In this embodiment of this application, a quantity of prisms in the prism group is not limited in this application. However, the quantity in the prism group may fit a quantity of imaging sub-light beams reflected by the deflection reflection component 102, so that each path of imaging sub-light is imaged on a different focal plane. In addition, regardless of whether the prism group includes two prisms, three prisms, or another quantity of prisms, a shape of the prism in the prism group is not limited in this application. For example, the first prism may be a right-angle prism, and the second prism may be a wedge-shaped prism. In addition, because the air gap exists between the first prism and the second prism, materials of the first prism and the second prism are not limited. In other words, a same material or different materials may be used. Generally, the prism material may be crown glass, flint glass, or the like.

In addition, in this embodiment of this application, each prism surface in the prism group may alternatively be plated with different film layers based on a function of the prism surface in the light path. For example, in the second prism, the fifth prism surface may be plated with a high reflection film, so that reflection of the second imaging sub-light on the surface is enhanced. Alternatively, in the second prism, the fourth prism surface may be plated with an anti-reflection film, so that transmission of the second imaging sub-light on the surface is enhanced.

Based on the foregoing solution, the deflection reflection component provided in this embodiment of this application splits one path of imaging light into at least two paths of imaging sub-light, and changes, through the prism group, optical paths of the at least two paths of imaging light, so that different imaging sub-light can be imaged on different focal planes, to form at least two images. In this embodiment of this application, a multi-image display solution can be implemented, and a light path is adjusted through a prism design, so that a size is more compact and there is no risk of image crosstalk.

The following describes some possible structures of the display apparatus provided in this application with reference to the descriptions of the deflection reflection component 102 in FIG. 3 to FIG. 5 and the descriptions of the prism group 103 in FIG. 6 and FIG. 7.

The following describes this embodiment of this application in detail through an example in which the display apparatus generates two images (on two focal planes).

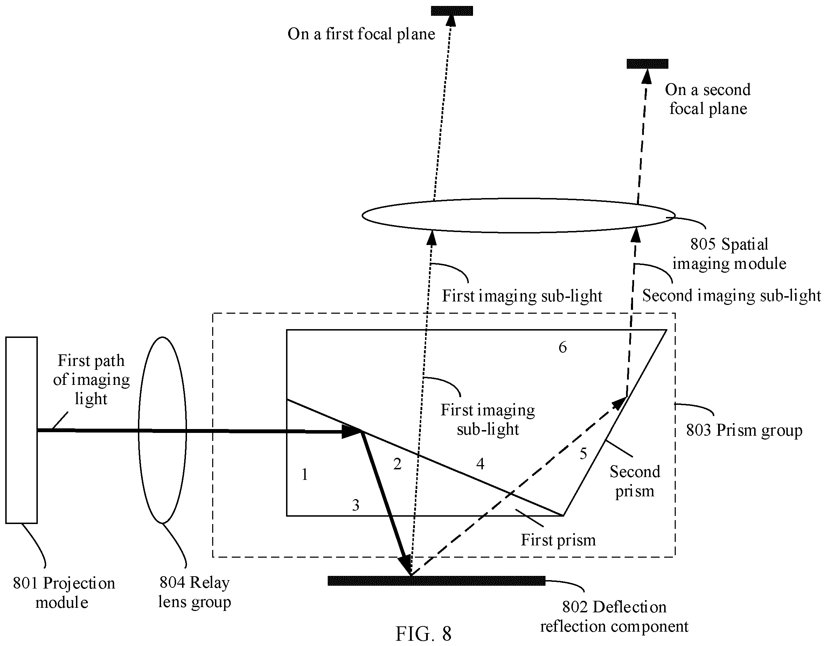

FIG. 8 is a schematic diagram of a display apparatus 800 according to an embodiment of this application. Specifically, as shown in FIG. 8, the display device 800 includes a projection module 801, a deflection reflection component 802, a prism group 803, and a spatial imaging module 805.

The projection module 801 is configured to project a first path of imaging light. The first path of imaging light transmits through a first prism surface of a first prism of the prism group 803, is totally reflected by a second prism surface of the first prism, and is emitted from a third prism surface of the first prism to a reflective surface of the deflection reflection component 802. The projection module 801 includes a picture generation unit PGU.

Optionally, when the first path of imaging light includes one image, the deflection reflection component 802 may include one reflection region, and reflect the first path of imaging light to the prism group 803 at a first moment at a first angle, to form a first path of imaging sub-light. The first path of imaging sub-light transmits through the third prism surface of the first prism, is emitted from the second prism surface of the first prism, transmits through a fourth prism surface of a second prism, is emitted from a sixth prism surface of the second prism to the spatial imaging module 805, and is imaged on a first focal plane through the spatial imaging module 805. At a second moment, the deflection reflection component 802 reflects the first path of imaging light to the prism group 803 at a second angle, to form a second path of imaging sub-light. The second path of imaging sub-light transmits through the third prism surface of the first prism, is emitted from the second prism surface of the first prism, transmits through the fourth prism surface of the second prism, is reflected by a fifth prism surface of the second prism, is emitted from the sixth prism surface of the second prism to the spatial imaging module 805, and is imaged on a second focal plane through the spatial imaging module 805. The spatial imaging module 805 may be a lens group, and a quantity of lenses in the spatial imaging module 805, a surface type of the lens, and the like are not limited in this application.

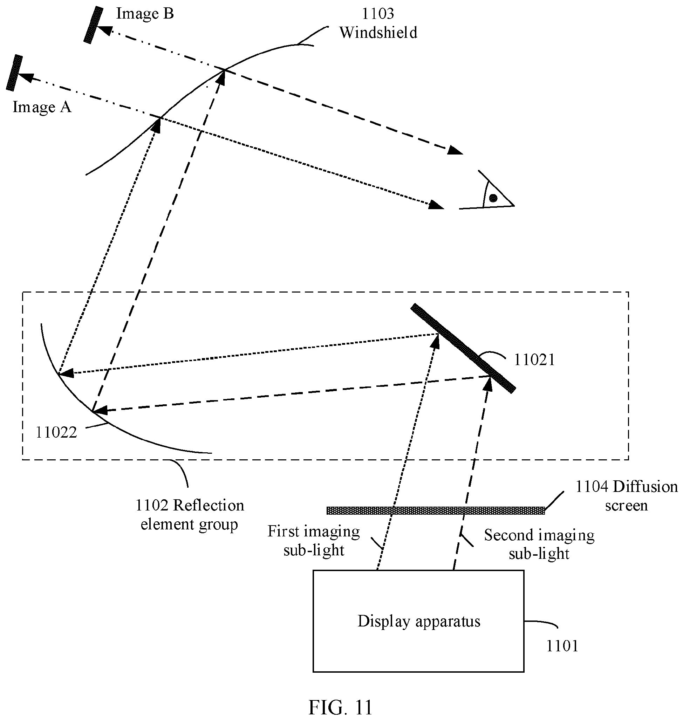

The projection module 801 can alternately output, in a time division manner, the first path of imaging light carrying different images A and B. For example, the image A is an image on a far-focus plane, and the image B is an image on a near-focus plane. The image A is displayed at a moment t1, the image B is displayed at a moment t2, the image A is displayed at a moment t3, and the image B is displayed at a moment t4. A switching interval between the image A and the image B is less than a vision persistence period of human eyes. In addition, to avoid image flickering, a switching interval (for example, t3-t1) between two images A and a switching interval (t4-t2) between two images B are also less than the vision persistence period of human eyes. In this case, the display apparatus 800 shown in FIG. 8 can enable a user to simultaneously see the image A and the image B, as shown in FIG. 11, to achieve effect that one display apparatus simultaneously displays two images.

It may be understood that the projection module 801 switches the image and the deflection reflection component 802 changes a deflection angle synchronously. In other words, when the projection module 801 switches the image, the deflection reflection component 802 changes the deflection angle. The foregoing manner can achieve optimal display effect of the display apparatus.

In addition, when the first path of imaging light includes one image, a light source in the projection module 801 provides, at the first moment, a light beam carrying data of the image A, and a modulation unit is configured to modulate, based on the data of the image A, the light beam emitted by the light source, so that light output from the modulation unit carries the data of the image A. A projection device is configured to outward project the imaging light carrying the data of the image A. In addition, the light source in the projection module 801 provides, at the second moment, a light beam carrying data of the image B, and the modulation unit is configured to modulate, based on the data of the image B, the light beam emitted by the light source, so that the light output from the modulation unit carries the data of the image B. The projection device is configured to outward project the imaging light carrying the data of the image B.

Based on the foregoing solution, the display apparatus provided in this application may include only one image source, separately generate different images at different moments, and emit different image light, to achieve effect of displaying a plurality of images. This reduces a size of the display apparatus and reduces costs of the display apparatus.

Optionally, when the first path of imaging light includes two images, the deflection reflection component 802 may include two reflection regions. A first reflection region of the deflection reflection component 802 reflects one part of a light beam in the first path of imaging light to the prism group 803 at a first angle, to form a first path of imaging sub-light. The first path of imaging sub-light transmits through the third prism surface of the first prism, is emitted from the second prism surface of the first prism, transmits through a fourth prism surface of a second prism, is emitted from a sixth prism surface of the second prism to the spatial imaging module 805, and is imaged on a first focal plane (a far-focus plane) through the spatial imaging module 805. A second reflection region of the deflection reflection component 802 reflects the other part of the light beam in the first path of imaging light to the prism group 803 at a second angle, to form a second path of imaging sub-light. The second path of imaging sub-light transmits through the third prism surface of the first prism, is emitted from the second prism surface of the first prism, transmits through the fourth prism surface of the second prism, is reflected by a fifth prism surface of the second prism, is emitted from the sixth prism surface of the second prism to the spatial imaging module 805, and is imaged on a second focal plane (a near-focus plane) through the spatial imaging module 805. In this way, one display apparatus simultaneously displays two images.

When the first path of imaging light includes two images, a light source in the projection module 801 provides a light beam for simultaneously carrying data of both an image A and an image B, and a modulation unit is configured to modulate, based on the data of the image A and the image B, the light beam emitted by the light source, so that light output from the modulation unit carries the data of the image A and the image B. A projection device in the projection module 801 is configured to project the imaging light carrying the data of the image A and the image B.

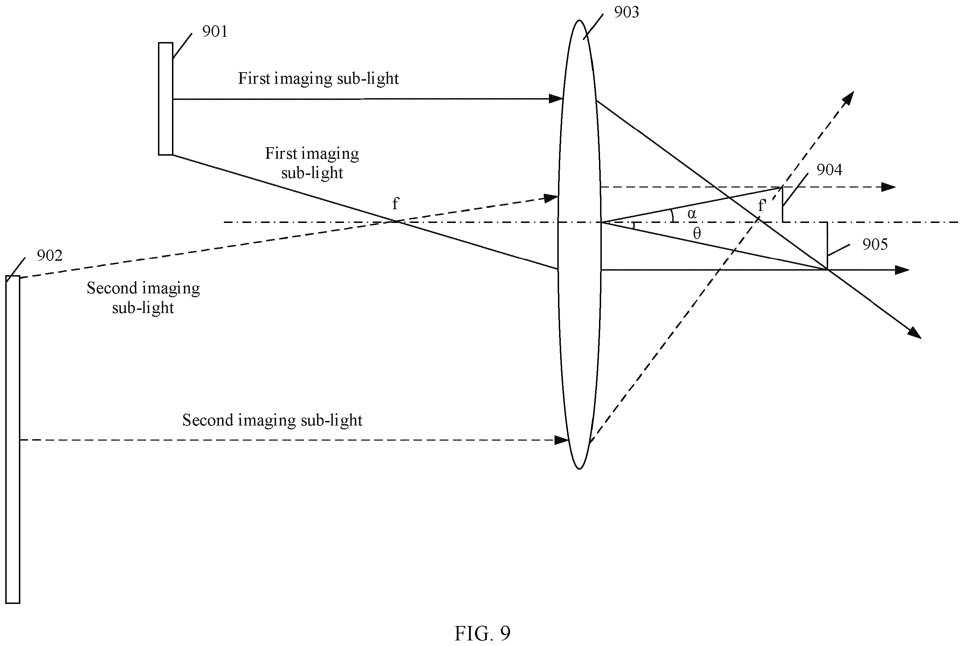

In addition, division of different image control regions in the deflection reflection component 802 may be determined based on a field of view of a generated image. Specifically, as shown in FIG. 9, when a field of view of a first image that needs to be generated is θ, a first image control region (the foregoing first reflection region) is 901 in FIG. 9, and when a field of view of a second image that needs to be generated is α, a second image control region (the foregoing second reflection region) is 902 in FIG. 9. Because optical paths of first imaging sub-light and second imaging sub-light passing through the prism group are different, in the schematic diagram of FIG. 9, the first image control region 901 and the second image control region 902 are not on a same plane. In FIG. 9, 905 and 904 respectively represent image plane locations of the first image, and 903 represents the spatial imaging module 805. In addition, for ease of drawing, an angle in FIG. 9 represents only 1/2 of the field of view, and FIG. 9 is a main view.

Based on the foregoing solution, the display apparatus provided in this application can change, based on disposing of the prism group, optical paths of the imaging sub-light, so that angles of the emitted imaging sub-light are the same, and all imaging sub-light can share the same spatial imaging module. This further reduces the size and the costs of the display apparatus. In addition, in this application, a light path is adjusted through a design of the prism group, so that the size is compact and there is no risk of image crosstalk.

When the first image light carries only one image, in a scenario in which the deflection reflection component 802 is a reflector, a quantity of reflectors may be one, and the reflector synchronously deflects at different moments by different angles based on different images carried in the first path of imaging light, so that reflected light has different emitting directions. In another scenario, for the deflection reflection component 802 in the apparatus 800, refer to the foregoing descriptions of the deflection reflection component 102, and details are not described herein again.

Optionally, the apparatus 800 may further include a relay lens group 804. The relay lens group 804 is a lens-type steering system, may be placed between the projection module 801 and the prism group 803, and is configured to change a propagation direction of the first path of imaging light, so that the first path of imaging light can be incident to the first prism in the prism group. This improves light utilization. The relay lens group 804 may be selected to include two groups of double-glued spherical lenses, and this is not limited in this application.

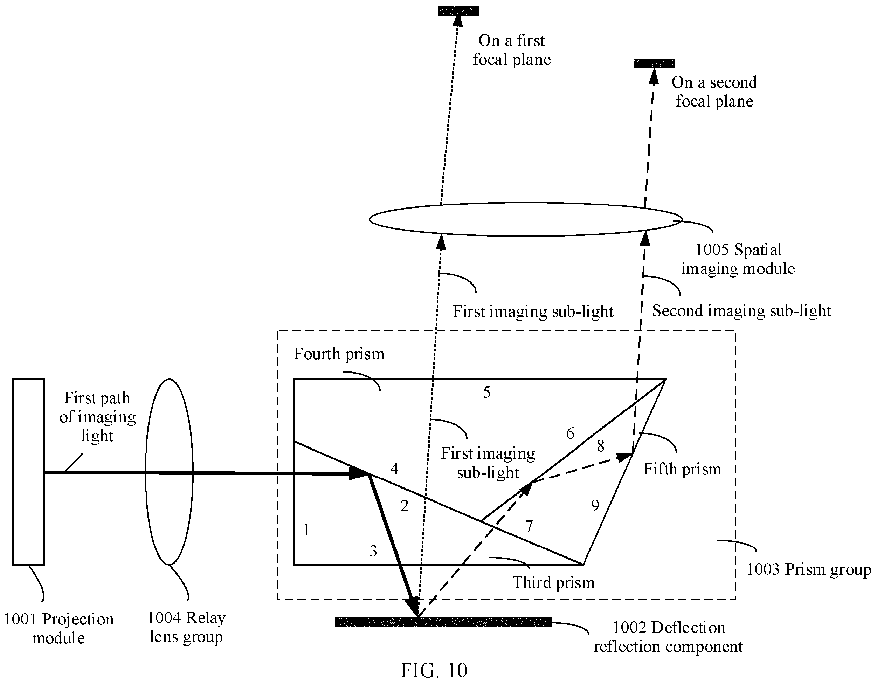

FIG. 10 is a schematic diagram of a display apparatus 1000 according to an embodiment of this application. Specifically, as shown in FIG. 10, the display device 1000 includes a projection module 1001, a deflection reflection component 1002, a prism group 1003, and a spatial imaging module 1005.

The projection module 1001 is configured to project a first path of imaging light. The first path of imaging light transmits through a first prism surface of a third prism of the prism group 1003, is totally reflected by a second prism surface of the third prism, and is emitted from a third prism surface of the third prism to a reflective surface of the deflection reflection component 1002.

Optionally, when the first path of imaging light includes one image, the deflection reflection component 1002 may include one reflection region.

In an implementation, when the deflection reflection component 1002 is a DMD, a micro reflector array of the DMD does not need to be divided into different reflection regions. Specifically, at a first moment, all micro reflectors in the micro reflector array of the DMD deflect to a first angle, and reflect the first path of imaging light to the prism group 1003 at the first angle, to form a first path of imaging sub-light. The first path of imaging sub-light transmits through the third prism surface of the third prism, is emitted from the second prism surface of the third prism, transmits through a fourth prism surface of a fourth prism, is emitted from a fifth prism surface of the fourth prism to the spatial imaging module 1005, and is imaged on a first focal plane (a far-focus plane) through the spatial imaging module 1005. At a second moment, all micro reflectors in the micro reflector array of the DMD deflect to a second angle, and reflect the first path of imaging light to the prism group 1003 at the second angle, to form a second path of imaging sub-light. The second path of imaging sub-light transmits through the third prism surface of the third prism, is emitted from the second prism surface of the third prism, transmits through a seventh prism surface of a fifth prism, is reflected once by an eighth prism surface of the fifth prism, is reflected once by a ninth prism surface of the fifth prism, is emitted from the eighth prism surface of the fifth prism, transmits through a sixth prism surface of the fourth prism, is emitted from the fifth prism surface of the fourth prism to the spatial imaging module 1005, and is imaged on a second focal plane (a near-focus plane) through the spatial imaging module 1005.

In another possible implementation, the deflection reflection component 1002 is a reflector. At a first moment, the reflector may deflect to a first angle, so that emitted first imaging sub-light is imaged on a first focal plane. At a second moment, the reflector may deflect to a second angle, so that emitted second imaging sub-light is imaged on a second focal plane.

The projection module 1001 can alternately output, in a time division manner, the first path of imaging light carrying different images A and B. For example, the image A is an image on a far-focus plane, and the image B is an image on a near-focus plane. For a specific output process of the projection module 1001, refer to the descriptions of the projection module 801 in the foregoing embodiment, and details are not described herein again.

The apparatus 1000 shown in FIG. 10 can enable a user to simultaneously see the image A and the image B, as shown in FIG. 11, to achieve effect that one display apparatus simultaneously displays two images.

Based on the foregoing solution, the display apparatus provided in this application may emit different image light through an image source (for example, the projection module 1001) to achieve effect of displaying a plurality of images. This reduces a size of the display apparatus and reduces costs of the display apparatus.

Optionally, when the first path of imaging light includes two images, the deflection reflection component 1002 may include two reflection regions.

In an implementation, when the deflection reflection component 1002 is a DMD, a micro reflector array of the DMD may be divided into two reflection regions. Specifically, a first reflection region reflects the first path of imaging light to the prism group 1003 at a first angle, to form a first path of imaging sub-light. The first path of imaging sub-light transmits through the third prism surface of the third prism, is emitted from the second prism surface of the third prism, transmits through a fourth prism surface of a fourth prism, is emitted from a fifth prism surface of the fourth prism to the spatial imaging module 1005, and is imaged on a first focal plane through the spatial imaging module 1005. A second reflection region reflects the first path of imaging light to the prism group 1003 at a second angle, to form a second path of imaging sub-light. The second path of imaging sub-light transmits through the third prism surface of the third prism, is emitted from the second prism surface of the third prism, transmits through a seventh prism surface of a fifth prism, is reflected once by an eighth prism surface of the fifth prism, is reflected by a ninth prism surface of the fifth prism, is emitted from the eighth prism surface of the fifth prism to a sixth prism surface of the fourth prism, transmits through the sixth prism surface, is emitted from the fifth prism surface of the fourth prism to the spatial imaging module 1005, and is imaged on a second focal plane through the spatial imaging module 1005. In this way, the display apparatus 1000 can simultaneously display two images.

For designs of the third prism, the fourth prism, and the fifth prism in FIG. 10, including each included angle of the prism surfaces, a material of the prisms, and a coating status, refer to related descriptions in FIG. 7.

Based on the foregoing solution, optical paths of imaging sub-light are changed through the prism group, and an included angle between the prism surfaces of the prism is designed, so that after the first path of imaging light passes through the prism group at a specific incident angle, angles of emitted imaging sub-light are the same, and all imaging sub-light can share the same spatial imaging module. This further reduces the size and the costs of the display apparatus. In addition, in this application, a light path is adjusted through a design of the prism group, so that the size is compact and there is no risk of image crosstalk.

Optionally, the apparatus 1000 may further include a relay lens group 1004. The relay lens group 1004 has a same structure as the relay lens group 804 in the foregoing embodiment, and details are not described herein again.

FIG. 11 is a schematic diagram of a structure of a display apparatus 1100 used in a transportation means according to an embodiment of this application. As shown in FIG. 11, the apparatus includes a display apparatus 1101, and 1101 is any one of the foregoing display apparatuses. First imaging sub-light and second imaging sub-light that are emitted by the display apparatus pass through a reflection element group 1102 (including a first reflection element 11021 and a second reflection element 11022), and are projected to a windshield 1103, to form two images.

It should be understood that a quantity of reflection elements included in the reflection element group 1102 is not limited to a quantity shown in FIG. 11, and may be correspondingly adjusted based on a requirement.

Optionally, the display apparatus 1100 may further include a diffusion screen 1104, so that an intermediate image is generated on the diffusion screen 1104 by using the imaging light, and a divergence angle of an emitted light beam is changed to expand a field of view of the generated image.

The transportation means includes but is not limited to an automobile, an airplane, a train, a ship, or the like.

A first image and a second image are respectively imaged at different distances from the windshield 1103. For example, a distance between the first image and the windshield 1103 is greater than a distance between the second image and the windshield 1103. In some examples, the first image is an augmented reality display image, and is used to display information such as indication information of an external object, navigation information, and the like. The second image is a status display image, and is used to display status information of the transportation means. Using an automobile as an example, the status information of the transportation means includes but is not limited to information such as a driving speed, a driving mileage, a fuel amount, a water temperature, a vehicle light status, and the like.

In addition, an embodiment of this application further provides a transportation means. The transportation means includes any one of the foregoing display devices. The transportation means includes but is not limited to an automobile, an airplane, a train, a ship, or the like.

The display apparatus provided in this embodiment of this application can generate different images in a time division manner, and the projection module is separated from a module (including the deflection reflection component, the prism group, and the spatial imaging module) for adjusting an image light path. Therefore, an image signal generated in the projection module may be controlled to adjust sizes of the first image and the second image that are output in different time sequences, and display fields of view of the first image and the second image may be flexibly adjusted to meet requirements of different vehicle models.

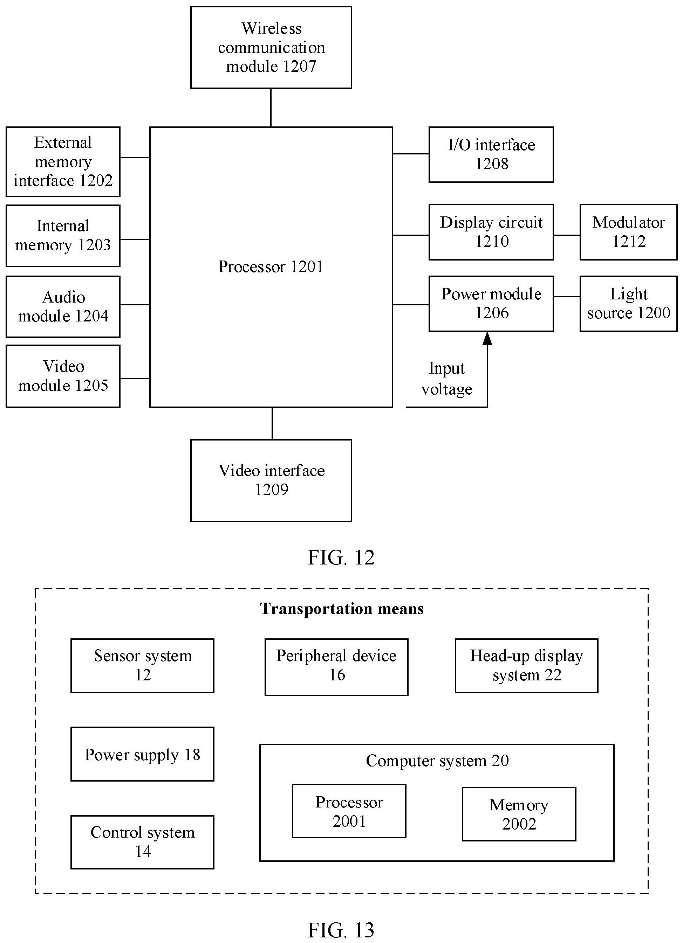

FIG. 12 is a schematic diagram of a circuit of a display apparatus according to an embodiment of this application. As shown in FIG. 12, the circuit in the display apparatus mainly includes a main processor (host CPU) 1201, an external memory interface 1202, an internal memory 1203, an audio module 1204, a video module 1205, a power module 1206, a wireless communication module 1207, an I/O interface 1208, a video interface 1209, a display circuit 1210, a modulator 1212, and the like. The main processor 1201 may be connected to peripheral elements such as the external memory interface 1202, the internal memory 1203, the audio module 1204, the video module 1205, the power module 1206, the wireless communication module 1207, the I/O interface 1208, the video interface 1209, and the display circuit 1210 through buses. The main processor 1201 may be referred to as a front-end processor.

In addition, the schematic diagram of the circuit in this embodiment of this application does not constitute a specific limitation on the display apparatus. In some other embodiments of this application, the display apparatus may include more or fewer components than components shown in the figure, some components may be combined, some components may be split, or different components may be arranged. The components shown in the figure may be implemented by hardware, software, or a combination of software and hardware.

The main processor 1201 includes one or more processing units. For example, the main processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU), and the like. Different processing units may be independent devices, or may be integrated into one or more processors.

A memory may be further disposed in the main processor 1201, and is configured to store instructions and data. In some embodiments, the memory in the main processor 1201 is a cache memory. The memory may store instructions or data that has been recently used or cyclically used by the main processor 1201. If the main processor 1201 needs to use the instructions or the data again, the main processor may directly invoke the instructions or the data from the memory. This avoids repeated access, reduces waiting time of the main processor 1201, and therefore improves system efficiency.

In some embodiments, the display apparatus may further include a plurality of input/output (Input/Output, I/O) interfaces 1208 connected to the main processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device such as a mouse, a touchpad, a keyboard, a camera, a speaker/horn, a microphone, or the like, or may be connected to a physical button (for example, a volume button, a brightness adjustment button, a power-on/off button, or the like) on the display apparatus.

The external memory interface 1202 may be configured to connect to an external storage card, for example, a micro SD card, to extend a storage capability of the display apparatus. The external storage card communicates with the main processor 1201 through the external memory interface 1202, to implement a data storage function.

The internal memory 1203 may be configured to store computer-executable program code. The executable program code includes instructions. The internal memory 1203 may include a program storage region and a data storage region. The program storage region may store an operating system, an application required by at least one function (such as a call function, a time setting function, or the like), and the like. The data storage region may store data (such as a phone book, world time, and the like) created in a process of using the display apparatus, and the like. In addition, the internal memory 1203 may include a high-speed random access memory, and may further include a non-volatile memory, for example, at least one magnetic disk storage device, a flash storage device, a universal flash storage (Universal Flash Storage, UFS), or the like. The main processor 1201 executes various functional applications and data processing of the display apparatus by running the instructions stored in the internal memory 1203 and/or the instructions stored in the memory disposed in the main processor 1201.

The display apparatus may implement an audio function such as music playing, calling, and the like through the audio module 1204, the application processor, and the like.

The audio module 1204 is configured to convert digital audio information into an analog audio signal output, and is also configured to convert an analog audio input into a digital audio signal. The audio module 1204 may also be configured to encode and decode an audio signal, for example, perform voice playing or recording. In some embodiments, the audio module 1204 may be disposed in the main processor 1201, or some functional modules of the audio module 1204 are disposed in the main processor 1201.

The video interface 1209 may receive an audio and video signal input externally, and may be specifically a high-definition multimedia interface (High-Definition Multimedia Interface, HDMI), a digital video interface (Digital Visual Interface, DVI), a video graphics array (Video Graphics Array, VGA), a display port (Display port, DP), and the like. The video interface 1209 may further output a video externally. When the display apparatus is used as a head-up display, the video interface 1209 may receive a speed signal and a power signal that are input by a nearby device, and may also receive an AR video signal input externally. When the display apparatus is used as a projector, the video interface 1209 may receive a video signal input by an external computer or a terminal device.

The video module 1205 may decode a video input by the video interface 1209, for example, perform H.264 decoding. The video module may further encode a video collected by the display apparatus, for example, perform H.264 encoding on a video collected by an external camera. In addition, the main processor 1201 may also decode the video input by the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging on incident polarized light, to output at least two paths of imaging light. In addition, the main processor 1201 may also output the one or more image signals to the display circuit 1210.

In this embodiment, the display circuit 1210 and the modulator 1212 are electronic elements in a modulation unit 230, and the display circuit 1210 may be referred to as a drive circuit.

The power module 1206 is configured to supply power to the main processor 1201 and a light source 1200 based on input power (for example, a direct current). The power module 1206 may include a rechargeable battery, and the rechargeable battery may supply power to the main processor 1201 and the light source 1200. Light emitted by the light source 1200 may be propagated to the modulator 1212 for imaging, to form an image light signal.

The wireless communication module 1207 may enable the display apparatus to perform wireless communication with the outside, and may provide wireless communication solutions such as a wireless local area network (Wireless Local Area Network, WLAN) (such as a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, and the like. The wireless communication module 1207 may be one or more devices integrating at least one communication processing module. The wireless communication module 1207 receives an electromagnetic wave through an antenna, performs frequency modulation and filtering processing on an electromagnetic wave signal, and sends a processed signal to the main processor 1201. The wireless communication module 1207 may further receive a to-be-sent signal from the main processor 1201, perform frequency modulation and amplification on the signal, and convert, through the antenna, the signal into an electromagnetic wave for radiation.

In addition, in addition to being input through the video interface 1209, video data decoded by the video module 1205 may also be received in a wireless manner through the wireless communication module 1207 or be read from an external memory. For example, the display apparatus may receive the video data from the terminal device or an in-vehicle infotainment system through a wireless local area network in a vehicle, and the display apparatus may further read audio and video data stored in the external memory.

The foregoing display apparatus may be installed on a transportation means. FIG. 13 is a schematic diagram of a possible functional framework of a transportation means according to an embodiment of this application.

As shown in FIG. 13, the functional framework of the transportation means may include various subsystems, for example, a sensor system 12, a control system 14, one or more peripheral devices 16 (one peripheral device is used as an example in the figure), a power supply 18, a computer system 20, and a head-up display system 22. Optionally, the transportation means may further include another functional system, for example, an engine system that supplies power to the transportation means, and this is not limited herein in this application.

The sensor system 12 may include several detection apparatuses. The detection apparatuses can sense measured information, and convert the sensed information into an electrical signal or other information in a required form based on a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like, and this is not limited in this application.

The control system 14 may include several elements, for example, a steering unit, a brake unit, a lighting system, a self-driving system, a map navigation system, a network time system, and an obstacle avoidance system. Optionally, the control system 14 may further include elements such as a throttle controller and an engine controller that are configured to control a driving speed of a vehicle, and the like, and this is not limited in this application.

The peripheral device 16 may include several elements, for example, a communication system, a touchscreen, a user interface, a microphone, a speaker, and the like shown in the figure. The communication system is configured to implement network communication between the transportation means and another device other than the transportation means. During actual application, the communication system may use a wireless communication technology or a wired communication technology to implement network communication between the transportation means and the another device. The wired communication technology may mean that the vehicle communicates with the another device through a network cable, an optical fiber, or the like.

The power supply 18 represents a system for supplying power or energy to the vehicle, and may include but is not limited to a rechargeable lithium battery or lead-acid battery, or the like. During actual application, one or more battery modules in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (that may also be referred to as a storage apparatus). During actual application, the memory 2002 is inside the computer system 20, or may be outside the computer system 20, for example, may be used as a cache in the transportation means, and this is not limited in this application. Details are as follows.

The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, a solid-state drive SSD, or the like. The memory 2002 may further include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code for controlling the vehicle. The processor 2001 may invoke the program code to control safe driving of the vehicle. A manner of implementing safe driving of the vehicle is specifically described in detail below in this application.

Optionally, in addition to storing the program code or the instructions, the memory 2002 may further store information such as a road map, a driving route, sensor data, and the like. The computer system 20 may implement a vehicle-related function in combination with other elements in the schematic diagram of the functional framework of the vehicle, for example, the sensor and the GPS in the sensor system. For example, the computer system 20 may control a driving direction, a driving speed, or the like of the transportation means based on data input of the sensor system 12, and this is not limited in this application.

The head-up display system 22 may include several elements, for example, a windshield, a controller, and a head-up display shown in the figure. The controller 222 is configured to: generate an image (for example, generate an image including a vehicle status such as a vehicle speed, a power/fuel amount, and the like and an image of augmented reality AR content) according to a user instruction, and send the image to the head-up display for display. The head-up display may include a picture generation unit and a reflector combination. The windshield is configured to fit the head-up display to implement a light path of the head-up display system, so that a target image is presented in front of a driver. Functions of some elements in the head-up display system may alternatively be implemented by another subsystem of the vehicle. For example, the controller may alternatively be an element in the control system.

FIG. 13 in this application shows that four subsystems are included. The sensor system 12, the control system 14, the computer system 20, and the head-up display system 22 are merely examples, and do not constitute a limitation. During actual application, the transportation means may combine several elements in the vehicle based on different functions, to obtain subsystems corresponding to the different functions. During actual application, the transportation means may include more or fewer systems or elements, and this is not limited in this application.

The foregoing transportation means may be a car, a truck, a motorcycle, a bus, a ship, an airplane, a helicopter, a lawn mower, an entertainment car, a playground vehicle, a construction device, a tram, a golf cart, a train, a handcart, or the like, and this is not specially limited in embodiments of this application.

Unless otherwise defined, a technical term or a scientific term used herein should have a general meaning understood by a person of ordinary skill in the art of the present disclosure.

## Claims

1. A display apparatus (800), comprising:
a projection module (801), configured to project a first path of imaging light to a deflection reflection component (802);
the deflection reflection component, configured to: reflect the first path of imaging light to generate at least two paths of imaging sub-light, and respectively reflect the at least two paths of imaging sub-light to a prism group (830) at at least two angles; and
the prism group, configured to: enable the at least two paths of imaging sub-light to propagate in the prism group through different paths, and emit the at least two paths of imaging sub-light, and **characterised in that**:
the deflection reflection component is configured to reflect the first path of imaging light to the prism group at a first moment at a first angle, to form a first path of imaging sub-light;
the deflection reflection component is configured to reflect the first path of imaging light to the prism group at a second moment at a second angle, to form a second path of imaging sub-light; and
the first path of imaging light projected by the projection module at the first moment and the first path of imaging light projected by the projection module at the second moment respectively carry different images.

2. The apparatus according to claim 1, wherein the prism group comprises a first prism and a second prism;
the first prism is configured to: totally reflect, to a reflective surface of the deflection reflection component, the first path of imaging light projected by the projection module, and transmit the at least two paths of imaging sub-light reflected by the deflection reflection component; and
the second prism is configured to: transmit first imaging sub-light that is in the at least two paths of imaging sub-light and that is from the first prism, and reflect second imaging sub-light that is in the at least two paths of imaging sub-light and that is from the first prism, so that the second imaging sub-light is emitted from the second prism.

3. The apparatus according to claim 2, wherein the first prism comprises a first prism surface, a second prism surface, and a third prism surface;
the first path of imaging light projected by the projection module transmits through the first prism surface, is totally reflected by the second prism surface, and then is emitted from the third prism surface; and
the at least two paths of imaging sub-light reflected by the deflection reflection component transmit through the third prism surface and the second prism surface.

4. The apparatus according to claim 2 or 3, wherein the second prism comprises a fourth prism surface, a fifth prism surface, and a sixth prism surface;
the first imaging sub-light that is in the at least two paths of imaging sub-light and that is emitted by the first prism transmits through the fourth prism surface, and is emitted from the sixth prism surface; and
the second imaging sub-light that is in the at least two paths of imaging sub-light and that is emitted by the first prism transmits through the fourth prism surface, is reflected by the fifth prism surface, and then is emitted from the sixth prism surface.

5. The apparatus according to claim 4, wherein
the second prism surface of the first prism is parallel to the fourth prism surface of the second prism.

6. The apparatus according to claim 1, wherein the prism group comprises a third prism, a fourth prism, and a fifth prism;
the third prism is configured to: totally reflect, to a reflective surface of the deflection reflection component, the first path of imaging light projected by the projection module, and transmit the at least two paths of imaging sub-light reflected by the deflection reflection component;
the fourth prism is configured to: transmit first imaging sub-light that is in the at least two paths of imaging sub-light and that is from the third prism, and transmit second imaging sub-light that is in the at least two paths of imaging sub-light and that is from the fifth prism; and
the fifth prism is configured to: reflect the second imaging sub-light that is in the at least two paths of imaging sub-light and that is from the third prism, and enable the second imaging sub-light to be emitted from the fifth prism to the fourth prism.

7. The apparatus according to claim 6, wherein the third prism comprises a first prism surface, a second prism surface, and a third prism surface;
the first path of imaging light projected by the projection module transmits through the first prism surface of the third prism, is totally reflected by the second prism surface of the third prism, and then is emitted from the third prism surface of the third prism; and
the at least two paths of imaging sub-light reflected by the deflection reflection component transmit through the third prism surface of the third prism and the second prism surface of the third prism at at least two angles.

8. The apparatus according to claim 6 or 7, wherein the fourth prism comprises a fourth prism surface, a fifth prism surface, and a sixth prism surface;
the first imaging sub-light that is in the at least two paths of imaging sub-light and that is emitted by the third prism transmits through the fourth prism surface of the fourth prism, and is emitted from the fifth prism surface of the fourth prism; and
the second imaging sub-light that is in the at least two paths of imaging sub-light and that is emitted by the third prism transmits through the sixth prism surface of the fourth prism, and is emitted from the fifth prism surface of the fourth prism.

9. The apparatus according to any one of claims 6 to 8, wherein the fifth prism comprises a seventh prism surface, an eighth prism surface, and a ninth prism surface; and
the second imaging sub-light that is in the at least two paths of imaging sub-light and that is emitted by the third prism transmits through the seventh prism surface of the fifth prism, is reflected by the eighth prism surface of the fifth prism and the ninth prism surface of the fifth prism, and then is emitted from the eighth prism surface.

10. The apparatus according to claim 9, wherein
the second prism surface of the third prism is parallel to the fourth prism surface of the fourth prism; and
the second prism surface of the third prism is parallel to the seventh prism surface of the fifth prism.

11. The apparatus according to claim 1, wherein the deflection reflection component comprises a first reflection region and a second reflection region;
the first reflection region is used to reflect a part of a light beam of the first path of imaging light to the prism group at a first angle, to form a first path of imaging sub-light; and
the second reflection region is used to reflect the other part of the light beam of the first path of imaging light to the prism group at a second angle, to form a second path of imaging sub-light.

12. The apparatus according to any one of claims 1 to 11, wherein the apparatus further comprises:
a spatial imaging module, configured to generate at least two images based on the at least two paths of imaging sub-light from the prism group.

13. A transportation means, comprising the display apparatus according to any one of claims 1 to 12.

## Patentansprüche

1. Anzeigevorrichtung (800), umfassend:
ein Projektionsmodul (801), das konfiguriert ist, um einen ersten Pfad von Abbildungslicht auf eine Ablenkungsreflexionskomponente (802) zu projizieren;
die Ablenkungsreflexionskomponente, die konfiguriert ist, um:
den ersten Pfad von Abbildungslicht zu reflektieren, um wenigstens zwei Pfade von Abbildungsteillicht zu erzeugen, und die wenigstens zwei Pfade von Abbildungsteillicht jeweils unter wenigstens zwei Winkeln zu einer Prismengruppe (830) zu reflektieren; und
die Prismengruppe, die konfiguriert ist, um: zu ermöglichen, dass sich die wenigstens zwei Pfade von Abbildungsteillicht in der Prismengruppe durch unterschiedliche Pfade ausbreiten, und die wenigstens zwei Pfade von Abbildungsteillicht zu emittieren, und **dadurch gekennzeichnet, dass**:
die Ablenkungsreflexionskomponente konfiguriert ist, um den ersten Pfad von Abbildungslicht zu einem ersten Zeitpunkt unter einem ersten Winkel zu der Prismengruppe zu reflektieren, um einen ersten Pfad von Abbildungsteillicht zu bilden;
die Ablenkungsreflexionskomponente konfiguriert ist, um den ersten Pfad von Abbildungslicht zu einem zweiten Zeitpunkt unter einem zweiten Winkel zu der Prismengruppe zu reflektieren, um einen zweiten Pfad von Abbildungsteillicht zu bilden; und
der erste Pfad von Abbildungslicht, der durch das Projektionsmodul zu dem ersten Zeitpunkt projiziert wird, und der erste Pfad von Abbildungslicht, der durch das Projektionsmodul zu dem zweiten Zeitpunkt projiziert wird, jeweils unterschiedliche Bilder tragen.

2. Vorrichtung nach Anspruch 1, wobei die Prismengruppe ein erstes Prisma und ein zweites Prisma umfasst;
das erste Prisma konfiguriert ist, um: den ersten Pfad von Abbildungslicht, der durch das Projektionsmodul projiziert wird, total zu einer reflektierenden Oberfläche der Ablenkungsreflexionskomponente zu reflektieren und die wenigstens zwei Pfade von Abbildungsteillicht, die durch die Ablenkungsreflexionskomponente reflektiert werden, zu transmittieren; und
das zweite Prisma konfiguriert ist, um: erstes Abbildungsteillicht, das in den wenigstens zwei Pfaden von Abbildungsteillicht ist und das von dem ersten Prisma ist, zu transmittieren und zweites Abbildungsteillicht, das in den wenigstens zwei Pfaden von Abbildungsteillicht ist und das von dem ersten Prisma ist, zu reflektieren, sodass das zweite Abbildungsteillicht aus dem zweiten Prisma emittiert wird.

3. Vorrichtung nach Anspruch 2, wobei das erste Prisma eine erste Prismenfläche, eine zweite Prismenfläche und eine dritte Prismenfläche umfasst;
der erste Pfad von Abbildungslicht, der durch das Projektionsmodul projiziert wird, durch die erste Prismenfläche transmittiert, durch die zweite Prismenfläche totalreflektiert wird und dann aus der dritten Prismenfläche emittiert wird; und die wenigstens zwei Pfade von Abbildungsteillicht, die durch die Ablenkungsreflexionskomponente reflektiert werden, durch die dritte Prismenfläche und die zweite Prismenfläche transmittieren.

4. Vorrichtung nach Anspruch 2 oder 3, wobei das zweite Prisma eine vierte Prismenfläche, eine fünfte Prismenfläche und eine sechste Prismenfläche umfasst;
das erste Abbildungsteillicht, das in den wenigstens zwei Pfaden von Abbildungsteillicht ist und das durch das erste Prisma emittiert wird, durch die vierte Prismenfläche transmittiert und aus der sechsten Prismenfläche emittiert wird; und
das zweite Abbildungsteillicht, das in den wenigstens zwei Pfaden von Abbildungsteillicht ist und das durch das erste Prisma emittiert wird, durch die vierte Prismenfläche transmittiert, durch die fünfte Prismenfläche reflektiert wird und dann aus der sechsten Prismenfläche emittiert wird.

5. Vorrichtung nach Anspruch 4, wobei
die zweite Prismenfläche des ersten Prismas parallel zu der vierten Prismenfläche des zweiten Prismas ist.

6. Vorrichtung nach Anspruch 1, wobei die Prismengruppe ein drittes Prisma, ein viertes Prisma und ein fünftes Prisma umfasst;
das dritte Prisma konfiguriert ist, um: den ersten Pfad von Abbildungslicht, der durch das Projektionsmodul projiziert wird, total zu einer reflektierenden Oberfläche der Ablenkungsreflexionskomponente zu reflektieren und die wenigstens zwei Pfade von Abbildungsteillicht, die durch die Ablenkungsreflexionskomponente reflektiert werden, zu transmittieren;
das vierte Prisma konfiguriert ist, um: erstes Abbildungsteillicht, das in den wenigstens zwei Pfaden von Abbildungsteillicht ist und das von dem dritten Prisma ist, zu transmittieren und zweites Abbildungsteillicht, das in den wenigstens zwei Pfaden von Abbildungsteillicht ist und das von dem fünften Prisma ist, zu transmittieren; und
das fünfte Prisma konfiguriert ist, um: das zweite Abbildungsteillicht, das in den wenigstens zwei Pfaden von Abbildungsteillicht ist und das von dem dritten Prisma ist, zu reflektieren und zu ermöglichen, dass das zweite Abbildungsteillicht aus dem fünften Prisma zu dem vierten Prisma emittiert wird.

7. Vorrichtung nach Anspruch 6, wobei das dritte Prisma eine erste Prismenfläche, eine zweite Prismenfläche und eine dritte Prismenfläche umfasst;
der erste Pfad von Abbildungslicht, der durch das Projektionsmodul projiziert wird, durch die erste Prismenfläche des dritten Prismas transmittiert, durch die zweite Prismenfläche des dritten Prismas totalreflektiert wird und dann aus der dritten Prismenfläche des dritten Prismas emittiert wird; und
die wenigstens zwei Pfade von Abbildungsteillicht, die durch die Ablenkungsreflexionskomponente reflektiert werden, durch die dritte Prismenfläche des dritten Prismas und die zweite Prismenfläche des dritten Prismas unter wenigstens zwei Winkeln transmittieren.

8. Vorrichtung nach Anspruch 6 oder 7, wobei das vierte Prisma eine vierte Prismenfläche, eine fünfte Prismenfläche und eine sechste Prismenfläche umfasst;
das erste Abbildungsteillicht, das in den wenigstens zwei Pfaden von Abbildungsteillicht ist und das durch das dritte Prisma emittiert wird, durch die vierte Prismenfläche des vierten Prismas transmittiert und aus der fünften Prismenfläche des vierten Prismas emittiert wird; und
das zweite Abbildungsteillicht, das in den wenigstens zwei Pfaden von Abbildungsteillicht ist und das durch das dritte Prisma emittiert wird, durch die sechste Prismenfläche des vierten Prismas transmittiert und aus der fünften Prismenfläche des vierten Prismas emittiert wird.

9. Vorrichtung nach einem der Ansprüche 6 bis 8, wobei das fünfte Prisma eine siebte Prismenfläche, eine achte Prismenfläche und eine neunte Prismenfläche umfasst; und
das zweite Abbildungsteillicht, das in den wenigstens zwei Pfaden von Abbildungsteillicht ist und das durch das dritte Prisma emittiert wird, durch die siebte Prismenfläche des fünften Prismas transmittiert, durch die achte Prismenfläche des fünften Prismas und die neunte Prismenfläche des fünften Prismas reflektiert wird und dann aus der achten Prismenfläche emittiert wird.

10. Vorrichtung nach Anspruch 9, wobei
die zweite Prismenfläche des dritten Prismas parallel zu der vierten Prismenfläche des vierten Prismas ist; und
die zweite Prismenfläche des dritten Prismas parallel zu der siebten Prismenfläche des fünften Prismas ist.

11. Vorrichtung nach Anspruch 1, wobei die Ablenkungsreflexionskomponente eine erste Reflexionsregion und eine zweite Reflexionsregion umfasst;
die erste Reflexionsregion verwendet wird, um einen Teil eines Lichtstrahls des ersten Pfads von Abbildungslicht unter einem ersten Winkel zu der Prismengruppe zu reflektieren, um einen ersten Pfad von Abbildungsteillicht zu bilden; und
die zweite Reflexionsregion verwendet wird, um den anderen Teil des Lichtstrahls des ersten Pfads von Abbildungslicht unter einem zweiten Winkel zu der Prismengruppe zu reflektieren, um einen zweiten Pfad von Abbildungsteillicht zu bilden.

12. Vorrichtung nach einem der Ansprüche 1 bis 11, wobei die Vorrichtung ferner umfasst:
ein räumliches Abbildungsmodul, das konfiguriert ist, um basierend auf den wenigstens zwei Pfaden von Abbildungsteillicht aus der Prismengruppe wenigstens zwei Bilder zu erzeugen.

13. Transportmittel, umfassend die Anzeigevorrichtung nach einem der Ansprüche 1 bis 12.

## Revendications

1. Appareil d'affichage (800), comprenant :
un module de projection (801), configuré pour projeter un premier chemin de lumière d'imagerie vers un composant de réflexion de déviation (802) ;
le composant de réflexion de déviation, configuré pour :
réfléchir le premier trajet de lumière d'imagerie pour générer au moins deux trajets de sous-lumière d'imagerie, et respectivement réfléchir les au moins deux trajets de sous-lumière d'imagerie vers un groupe de prismes (830) sous au moins deux angles ; et
le groupe de prismes, configuré pour : permettre à au moins deux trajets de sous-lumière d'imagerie de se propager dans le groupe de prismes par des chemins différents, et d'émettre l'au moins deux trajets de sous-lumière d'imagerie, et **caractérisé en ce que** :
le composant de réflexion de déviation est configuré pour réfléchir le premier trajet de lumière d'imagerie vers le groupe de prismes à un premier instant et sous un premier angle, pour former un premier trajet de sous-lumière d'imagerie ;
le composant de réflexion de déviation est configuré pour réfléchir le premier trajet de lumière d'imagerie vers le groupe de prismes à un second instant et sous un second angle, pour former un second trajet de sous-lumière d'imagerie ; et
le premier trajet de lumière d'imagerie projeté par le module de projection au premier instant et le premier trajet de lumière d'imagerie projeté par le module de projection au second instant transportent respectivement des images différentes.

2. Appareil selon la revendication 1, dans lequel le groupe de prismes comprend un premier prisme et un deuxième prisme ;
le premier prisme est configuré pour : réfléchir totalement, sur une surface réfléchissante du composant de réflexion de déviation, le premier trajet de lumière d'imagerie projeté par le module de projection, et transmettre les au moins deux trajets de sous-lumière d'imagerie réfléchis par le composant de réflexion de déviation ; et
le deuxième prisme est configuré pour : transmettre la première sous-lumière d'imagerie qui est dans les au moins deux trajets de sous-lumière d'imagerie et qui provient du premier prisme, et réfléchir la seconde sous-lumière d'imagerie qui est dans les au moins deux trajets de sous-lumière d'imagerie et qui provient du premier prisme, de sorte que la seconde sous-lumière d'imagerie est émise par le deuxième prisme.

3. Appareil selon la revendication 2, dans lequel le premier prisme comprend une première surface prismatique, une deuxième surface prismatique, et une troisième surface prismatique ;
le premier trajet de lumière d'imagerie projeté par le module de projection traverse la première surface prismatique, est totalement réfléchi par la deuxième surface prismatique, puis est émis par la troisième surface prismatique ; et
les au moins deux trajets de sous-lumière d'imagerie réfléchie par le composant de réflexion de déviation traversent la troisième surface prismatique et la deuxième surface prismatique.

4. Appareil selon la revendication 2 ou 3, dans lequel le deuxième prisme comprend une quatrième surface prismatique, une cinquième surface prismatique, et une sixième surface prismatique ;
la première sous-lumière d'imagerie qui est dans les au moins deux trajets de sous-lumière d'imagerie et qui est émise par le premier prisme traverse la quatrième surface prismatique, et est émise par la sixième surface prismatique ; et
la seconde sous-lumière d'imagerie qui est dans les au moins deux trajets de sous-lumière d'imagerie et qui est émise par le premier prisme traverse la quatrième surface prismatique, est réfléchie par la cinquième surface prismatique, puis est émise par la sixième surface prismatique.

5. Appareilselon la revendication 4, dans lequel la deuxième surface prismatique du premier prisme est parallèle à la quatrième surface prismatique du deuxième prisme.

6. Appareil selon la revendication 1, dans lequel le groupe de prismes comprend un troisième prisme, un quatrième prisme, et un cinquième prisme ;
le troisième prisme est configuré pour : réfléchir totalement, sur une surface réfléchissante du composant de réflexion de déviation, le premier trajet de lumière d'imagerie projeté par le module de projection, et transmettre les au moins deux trajets de sous-lumière d'imagerie réfléchis par le composant de réflexion de déviation ;
le quatrième prisme est configuré pour : transmettre la première sous-lumière d'imagerie qui est dans les au moins deux trajets de sous-lumière d'imagerie et qui provient du troisième prisme, et transmettre la seconde sous-lumière d'imagerie qui est dans les au moins deux trajets de sous-lumière d'imagerie et qui provient du cinquième prisme ; et
le cinquième prisme est configuré pour : réfléchir la seconde sous-lumière d'imagerie qui est dans les au moins deux trajets de sous-lumière d'imagerie et qui provient du troisième prisme, et permettre à la seconde sous-lumière d'imagerie d'être émise du cinquième prisme vers le quatrième prisme.

7. Appareil selon la revendication 6, dans lequel le troisième prisme comprend une première surface prismatique, une deuxième surface prismatique, et une troisième surface prismatique ;
le premier trajet de lumière d'imagerie projeté par le module de projection traverse la première surface prismatique du troisième prisme, est totalement réfléchi par la deuxième surface prismatique du troisième prisme, puis est émis par la troisième surface prismatique du troisième prisme ; et
les au moins deux trajets de sous-lumière d'imagerie réfléchie par le composant de réflexion de déviation traversent la troisième surface prismatique du troisième prisme et la deuxième surface prismatique du troisième prisme à au moins deux angles.

8. Appareil selon la revendication 6 ou 7, dans lequel le quatrième prisme comprend une quatrième surface prismatique, une cinquième surface prismatique, et une sixième surface prismatique ;
la première sous-lumière d'imagerie qui est dans les au moins deux trajets de sous-lumière d'imagerie et qui est émise par le premier prisme traverse la quatrième surface prismatique du quatrième prisme, et est émise par la cinquième surface prismatique du quatrième prisme ; et
la première sous-lumière d'imagerie qui est dans les au moins deux trajets de sous-lumière d'imagerie et qui est émise par le troisième prisme traverse la sixième surface prismatique du quatrième prisme, et est émise par la cinquième surface prismatique du quatrième prisme.

9. Appareil selon l'une quelconque des revendications 6 à 8, dans lequel le cinquième prisme comprend une septième surface prismatique, une huitième surface prismatique, et une neuvième surface prismatique ; et
la seconde sous-lumière d'imagerie qui est dans les au moins deux chemins de sous-lumière d'imagerie et qui est émise par le troisième prisme traverse la septième surface prismatique du cinquième prisme, est réfléchie par la huitième surface prismatique du cinquième prisme et la neuvième surface prismatique du cinquième prisme, puis est émise par la huitième surface prismatique.

10. Appareil selon la revendication 9, dans lequel
la deuxième surface prismatique du troisième prisme est parallèle à la quatrième surface prismatique du quatrième prisme ; et
la deuxième surface prismatique du troisième prisme est parallèle à la septième surface prismatique du cinquième prisme.

11. Appareil selon la revendication 1, dans lequel le composant de réflexion de déviation comprend une première région de réflexion et une seconde région de réflexion ;
la première région de réflexion est utilisée pour réfléchir une partie d'un faisceau lumineux du premier trajet de lumière d'imagerie vers le groupe de prismes selon un premier angle, pour former un premier trajet de sous-lumière d'imagerie ; et
la seconde région de réflexion est utilisée pour réfléchir l'autre partie du faisceau lumineux du premier trajet de lumière d'imagerie vers le groupe de prismes à un second angle, pour former un second trajet de sous-lumière d'imagerie.

12. Appareil selon l'une quelconque des revendications 1 à 11, dans lequel l'appareil comprend également :
un module d'imagerie spatiale, configuré pour générer au moins deux images sur la base des au moins deux trajets de sous-lumière d'imagerie provenant du groupe de prismes.

13. Moyen de transport, comprenant l'appareil d'affichage selon l'une quelconque des revendications 1 à 12.
